# EUROPEAN PATENT APPLICATION

(11) **EP 4 806 869 A1**
(43) Date of publication of application: **16.09.2026**
(21) Application number: 26163325.9
(22) Date of filing: 09.03.2026
(51) Int. Cl.: C04B 41/00, C04B 41/53, C04B 41/91, F01D 5/00, C04B 41/89

(54) **METHODS FOR COATING REMOVAL**

(30) Priority: 11.03.2025 US 202519076225
(71) Applicant: General Electric Company, Cincinnati, Ohio 45215 (US)
(72) Inventor: PROCHASKA, Stephanie Orfali, Niskayuna, 12309 (US); VOZAR, Andrea Lena, Niskayuna, 12309 (US)
(74) Representative: Openshaw & Co.

(57) **Abstract**

Methods are described herein for assisting with coating (604A) removal. In some approaches, a method (200) for removing a coating (604A) from a coated component (100, 700, 800, 900) is provided. The coated component (100, 700, 800, 900) comprises a substrate (102, 302, 602, 702, 802, 902) with a coating (604A) disposed on the substrate (102, 302, 602, 702, 802, 902). The coating (604A) may have one or more defects therein. The method includes forming a plurality of recesses (314, 414, 614, 714, 814, 914) in the coating (104) that extend from a surface (322, 422) of the coating (104) through one or more layers of the coating (104) to a target layer (320, 420, 720, 820, 920) to produce an etched coating (304, 404, 604B, 704, 804, 904, 604B), and removing the one or more layers of the coating (104) by subjecting the etched coating (304, 404, 604B, 704, 804, 904, 604B) to at least one of a mechanical removal process or a chemical removal process to expose the target layer (320, 420, 720, 820, 920).

## Description

### TECHNICAL FIELD

These teachings relate generally to compositions and methods for removing a coating from a substrate.

### BACKGROUND

Gas turbine engines may be subjected to high operating temperatures. Components that are exposed to these high operating temperatures often include protective coatings. For example, turbine blades and turbine vanes, may include one or more coating layers that protect the component and thereby enhance durability of the component under harsh operating conditions. Environmental barrier coatings (EBCs) are one type of protective coating that can be applied to components subjected to high temperatures. EBCs protect components from attack by reactive species, such as high temperature water vapor.

With the use of EBCs, as part of component maintenance, the EBCs may be removed from a component and replaced. For example, when a layer of an EBC is damaged during engine operation, the EBC may be removed and replaced to produce a refreshed coating. In addition, an EBC may be removed from a component during component manufacturing, for example, to address coating defects or damage. Thus, methods for removing environmental barrier coatings may be desirable.

### BRIEF DESCRIPTION OF DRAWINGS

Various needs are at least partially met through provision of the methods for coating removal described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic cross-sectional side view of an exemplary component with a coating that may be removed using the methods described herein, according to some embodiments;
FIG. 2 is a flow diagram of a method for coating removal, according to some embodiments;
FIG. 3 is a schematic cross-sectional side view of a coating with a plurality of recesses formed therein, according to some embodiments;
FIG. 4 is a schematic cross-sectional side view of a coating with a plurality of recesses formed therein, according to some embodiments;
FIG. 5A is a schematic top plan view a coating with a plurality of recesses that form a first pattern, according to some embodiments;
FIG. 5B is a schematic top plan view of a coating with a plurality of recesses that form a second pattern, according to some embodiments;
FIG. 5C is a schematic to plan view of a coating with a plurality of recesses that form a third pattern, according to some embodiments;
FIG. 6 is a schematic perspective view of a laser forming recesses in a coating, according to some embodiments;
FIG. 7 is a schematic perspective view of a blade for mechanical coating removal, according to some embodiments;
FIG. 8 is a schematic perspective view of an abrasive blasting machine for mechanical coating removal, according to some embodiments; and
FIG. 9 is a schematic perspective view of a vessel for exposing a coating to a reagent for chemical coating removal, according to some embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Provided herein are methods for removing a coating from a coated component. The methods described herein can also be used to otherwise compromise a coating to expose one or more coating layers and/or mechanically weaken the coating. The methods described herein involve forming a plurality of recesses or slots in a coating to facilitate coating removal. The plurality of recesses may extend from a surface of the coating and through one or more layers of the coating to a target layer. The target layer may be a layer that it is desirable to expose, for example, for re-coating purposes or to remove defects. Forming the recesses in the coating may weaken the coating, making subsequent removal of the coating (or portions thereof) to expose the target layer easier. In some aspects, the coating is a defective coating and, once the coating is removed, one or more coating layers can be reapplied.

Stripping of environmental barrier coating (EBC) layers is a precursor to component repair through recoating. Grit blasting-the conventional method used to strip an EBC-can be labor-intensive and may mechanically damage the underlying substrate. The methods of coating removal described herein compromise the EBC (or other coating) surface to aid in removal through subsequent mechanical or chemical means. The coating is compromised by forming a plurality of recesses or slots in the coating. Forming the recesses may involve using a laser, saw, or other means to form a grid, or other type of pattern into the EBC, and in some examples, through to the bond coat. The etched EBC can then be more easily removed through grit blasting or can be scraped off with a sharp blade or other implement. Due to enhanced access to layers of the coating (e.g., the bond coat) and coating segmentation, etched EBC can also be more readily removed through chemical processes which typically require exposure times long enough to damage the underlying ceramic-matrix-composite ("CMC"). Additionally, forming recesses in a hermetic slurry EBC, such as the coating present on aeroengine nozzles, compromises the hermeticity of the coating, thus rendering it susceptible to chemical stripping methods.

Once the environmental barrier coating is removed, the freshly exposed ceramic matrix composite surface can then be recoated with a bond coat, such as a silicon (Si) bond coat or another bond coat suited for high temperature applications, and/or new EBC after minimal surface prep (e.g., grit blasting). In some embodiments, the bond coat includes silicon (e.g., elemental silicon), a silicon-based material (e.g., a silicide), mullite, or a combination thereof. The methods described herein can also be used to remove EBC prior to re-melt infiltration repair of an underlying CMC substrate.

The methods for coating removal described herein can be used on a variety of coatings, with one exemplary group of coatings being EBCs. The methods for coating removal described herein can also be used to remove bond coats, such as silicon (Si) bond coats that are incorporated in or underly a coating such as an EBC. In addition, the methods may be used to remove thermally grown oxides (TGOs), which are layers of oxides that can form at the interface of an EBC or a thermal barrier coating (TBC) and the bond coat.

As used herein, an etched coating may refer to a coating in which one or more indentations, recesses, slots, cuts, holes, etc., have been intentionally formed therein. It is to be understood, however, that the term "etched" is not intended to denote a particular process used to form the one or more indentations, recesses, slots, cuts, holes, etc. Further, it is to be understood that defects such as cracks that form in a coating during coating formation and/or coating use do not result in an etched coating as used herein.

As used herein, a stripped substrate can include a substrate where at least a portion of a coating (e.g., one or more layers or portions thereof) has been removed from the substrate.

As used herein, a field run component can include a component that has been exposed to operating conditions of a system or process in which the coated component is employed. For example, where the coated component is a component of a gas turbine engine, the component may have been exposed to engine operation.

As used herein, a newly manufactured part can include a coated component that has been manufactured (at least partially) and has not been exposed to operating conditions of the system or process in which the coated component will ultimately be employed.

As used herein, a defective coating can include a coating that has one or more defects. Examples of defects include but are not limited to surface defects such as breaks, cracks, peeling, blistering, holes, cratering and can also include adhesion failure of the coating. A defect may be present in one or more individual layers of a coating. Further, a defect may result from a manufacturing process used to make the coated component and/or from operation of the coated component in a system or process in which the coated component is employed. It is to be understood that, in some embodiments, the intentionally formed indentations described herein are not considered defects or necessarily result in a defective coating.

As used herein, environmental-barrier-coating or "EBCs" can include a coating system comprising one or more layers of ceramic materials, each of which provides specific or multifunctional protections to the underlying substrate. EBCs can be comprised of single or multiple layers of materials. Each layer may be composed of a single or multiple chemical compositions and may be doped as desired. EBCs generally include a plurality of layers, such as silicon-based coatings (e.g., elemental silicon bondcoat) rare earth silicate coatings (e.g., rare earth disilicates such as slurry or APS-deposited yttrium ytterbium disilicate (YbYDS)), alkaline earth aluminosilicates (e.g., comprising barium-strontium-aluminum silicate (BSAS), such as having a range of compositions of BaO, SrO, Al₂O₃, SiO₂, or combinations thereof), or combinations thereof.

EBC materials include, but are not limited to, rare earth (RE)-disilicates; rare earth (RE)-monosilicates; alkaline earth (AE) aluminosilicates (AEAl₂Si₂O₈); aluminum silicate or mullite (Al₆Si₂Oₗ₃); zirconium silicate (ZrSiO₄), hafnium silicate (HfSiO₄); compounds having the formula MₓHf_{y}O_{z}; compounds having the formula (MₓSi_{y}); silicon nitride (Si₃N₄); silicon carbide (SiC); ceramics based on the elements silicon, aluminum, oxygen, and nitrogen (SiAlON); compounds having the formula (SiₓC_{y}N_{z}O); oxide composites; and non-oxide composites. Rare earth elements include cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y). Alkaline earth elements include strontium (Sr), barium (Ba), and radium (Ra). An example of an alkaline earth aluminosilicate is Ba_{0.75}Sr_{0.25}Al₂Si₂O₈ (BSAS). In the above formulas M is a rare earth element, hafnium (Hf), titanium (Ti), or tantalum (Ta).

The EBC can be fabricated in any suitable manner. In some embodiments, the EBC is fabricated using a thermal spray method. In other embodiments, the EBC is fabricated using a slurry-based process. In other embodiments, the EBC is fabricated using a physical vapor deposition process, including but not limited to, electron beam physical vapor (EBPVD) and plasma spray physical vapor deposition (PSPVD). In yet other embodiments, the EBC is fabricated using sputtering techniques, including but not limited to magnetron sputtering, RF sputtering, diode sputtering, or reactive sputtering. Thermal spray methods that can be used to fabricate the EBC include but are not limited to air plasma spraying (APS), very low-pressure plasma spraying (VLPPS), suspension plasma spraying (SPS), high velocity oxygen fuel (HVOF) spraying, solution precursor plasma spray (SPPS), and high velocity air fuel (HVAF) spraying.

The EBC can also be fabricated using one or more sintering aids. For example, one or more sintering aids may be involved in any of the aforementioned fabrication techniques (e.g., thermal spray process, slurry-based process, physical vapor deposition processes, or sputtering processes).

As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₂), as well as glassy aluminosilicates.

CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

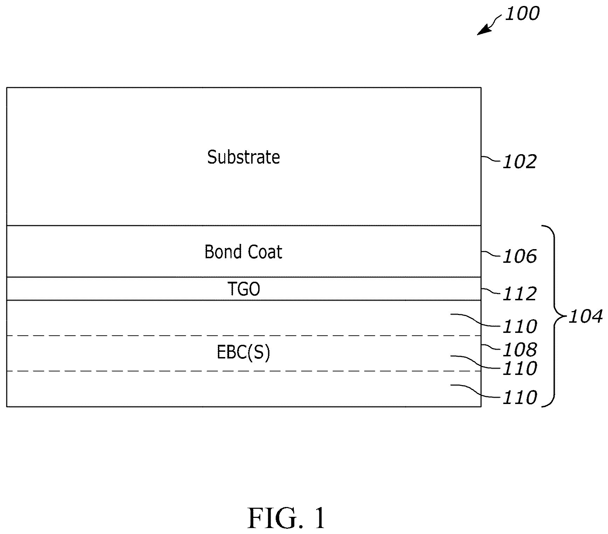

Turning to the figures, FIG. 1 shows an exemplary coated component 100 that can be subjected to the coating removal methods described herein. The coated component 100 includes a substrate 102 and an EBC 104 disposed on a surface of the substrate 102. In some embodiments, the substrate 102 is formed from a CMC material. In other embodiments, the substrate 102 is formed from one or more of a superalloy, a steel alloy, a stainless steel alloy, an aluminum alloy, etc. In some embodiments, the substrate 102 is formed from a monolithic silicon carbide (SiC).

In the example of FIG. 1, the EBC 104 comprises a bond coat 106 that is disposed in direct contact with the substrate 102. Though, in some embodiments, a bond coat 106 may not be present in the EBC 104. An EBC top coat 108 is disposed over the bond coat 106. In one embodiment, the bond coat 106 comprises silicon (e.g., elemental silicon), a silicon-based material (e.g., a silicide), mullite, or a combination thereof.

When the bond coat 106 comprises a silicon-containing material, a thermally grown oxide ("TGO") layer 112 is present on the surface of the bond coat 106 as shown in FIG. 1. Thus, the bond coat 106 and the TGO layer 112 are between the silicon-containing substrate 102 and the EBC top coat 108. The TGO layer 112 may form on the surface of the bond coat 106 when silicon in the bond coat 106 oxidizes upon exposure to air. For example, the TGO layer 112 may be a layer of silicon oxide (sometimes referred to as "silicon oxide scale" or "silica scale"), formed during exposure to oxygen (e.g., during manufacturing and/or use) of the coated component 100.

The EBC top coat 108 comprises a plurality of EBC layers 110. It is also contemplated that, in some embodiments, the EBC top coat 108 may comprise a single EBC layer. Each of the individual EBC layers 110 can be formed of materials selected from typical EBC layer chemistries.

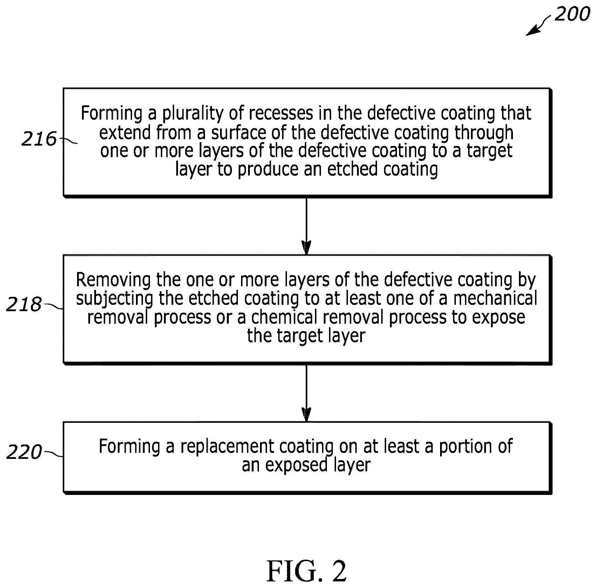

Turning to FIG. 2, an exemplary method 200 for removing one or more layers of a coating from a coated component is shown. In some embodiments, the method 200 is used to remove a defective coating from a coated component. Thus, the coated component may comprise a substrate with a defective coating disposed on the substrate. The coated component can be a newly manufactured part, or a field run component.

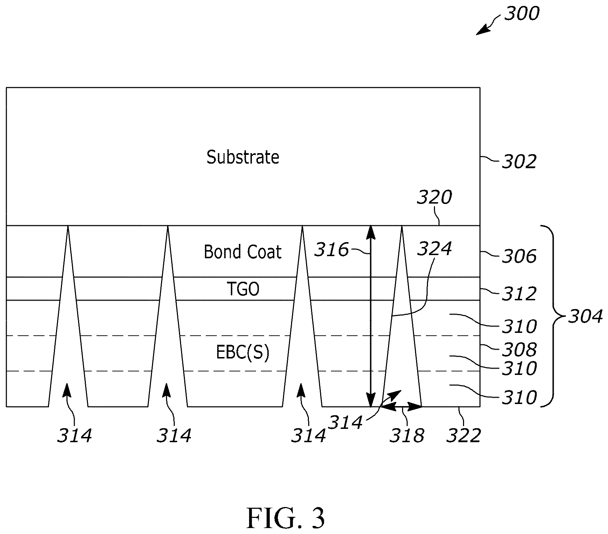

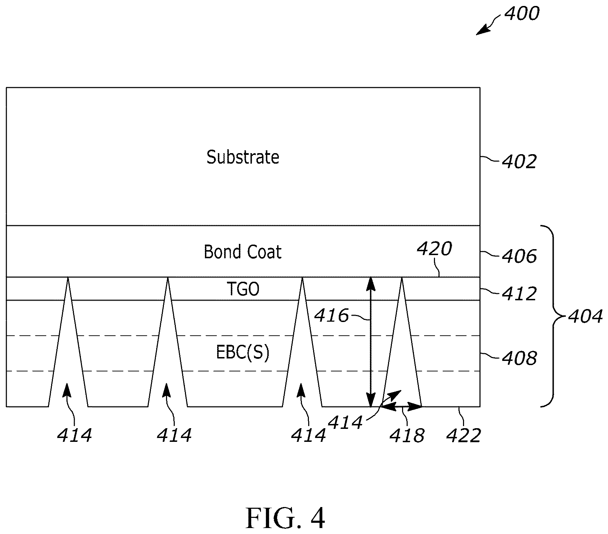

In some embodiments, the coated component in the method 200 comprises a CMC substrate coated with an EBC. Thus, the method 200 can be used to remove the EBC or portions thereof from the CMC substrate. For example, the method 200 can be used to remove the EBC 104 or portions thereof from the coated component 100 of FIG. 1. The method 200 is described with reference to FIG. 3, which shows an etched coating 304, and FIG. 4, which illustrates an etched coating 400.

At block 216, a plurality of recesses 314, 414 are formed in the coating 104 (see FIG. 1) to produce or form an etched coating 304, 404. One of more of the plurality of recesses 314, 414 extend from a surface 322, 422 of the defective coating to the target layer 320, 420. In some embodiments, all of the plurality of recesses 314, 414 extend from the surface 322, 422 of the coating to the target layer 320, 420. In some embodiments, one or more or, in some aspects, all of the plurality of recesses 314, 414 extend through the one or more layers of the coating before reaching the target layer. For example, the recess(es) 314, 414 may extend through one or more EBC top coat layers 308, 408 (e.g., layers having defect(s)), through a TGO 312, 412, and/or through a bond coat 306, 406 before reaching the target layer 320 420.

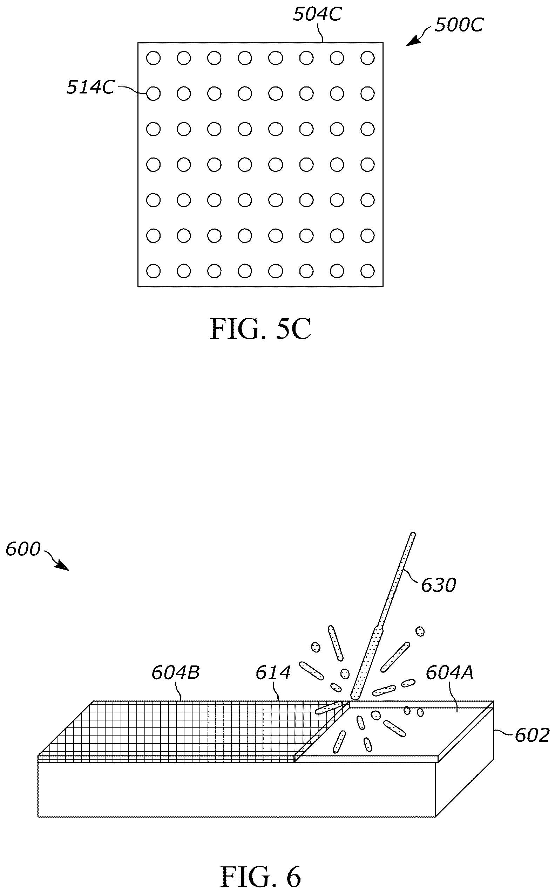

The plurality of recesses 314, 414 can be formed in any suitable manner. In some approaches, forming the plurality of recesses 314, 414 includes cutting or engraving the coating 104 with a cutting tool. FIG. 6 shows an exemplary cutting tool employed to form a plurality of recesses in a coating. Suitable cutting tools include but are not limited to a blade, a laser, an ultrasonic cutting machine, an electric discharge machining (EDM) device, or a water jet cutter. The blade can be in the form of a knife, a saw, or other sharp implement or straight edge. In some approaches, forming the plurality of recesses includes etching the coating using an etchant. The etchant can be any suitable etchant and, in some aspects, is a corrosive chemical solution. The etchant may be selected such that it selectively removes material from the coating or portions thereof while leaving the substrate intact.

Each of the plurality of recesses have a recess depth 316, 416. The recess depth 316, 416 may define a depth for one or more recesses formed in the coating. The recess depth 316, 416 extends through one or more layers of the defective coating and reaches a target layer 320, 420 of the coated component 300, 400. The recess depth 316, 416 may extend through one of more defective or damaged layers of the coating. Thus, the target layer 320, 420 may be a layer in which the defect(s) are not present. In this manner, the recess(es) may be used for selective removal of defective coating layers from the coated component 300, 400.

Referring now to FIG. 3, in some embodiments, the target layer 320 of the coated component 300 is a portion of the substrate 302. In some examples, the recess depth 316 may extend to an interface of the substrate with the coating. For example, as shown in FIG. 3, the exemplary etched coating 304 has recesses having a recess depth 316 that extends to an interface of the substrate with the coating. In other examples, the recess depth 316 may extend into the substrate 302 (not shown). Though, in some applications, it may not be desirable for the recess(es) to penetrate the substrate 302 itself.

The etched coating 304 includes a bond coat 306 and an EBC top coat 308. In the etched coating 304, a TGO 312 is formed between the bond coat 306 and the EBC top coat 308. The EBC top coat 308 includes a plurality of EBC layers 310. The etched coating 304 includes a plurality of recesses 314 formed therein. In some approaches, the etched coating 304 is produced or formed using the method 200 of FIG. 2 or portions thereof. In some embodiments, the coated component 300 corresponds to the coated component 100 of FIG. 1.

In the etched coating 304, each of the plurality of recesses 314 extend from a surface 322 of the etched coating 304 to a target layer 320. As illustrated, the target layer 320 is a portion of the substrate 302. The target layer 320 is disposed at an interface between the substrate 302 and the etched coating 304. Each of the plurality of recesses 314 extend through the bond coat 306, the EBC layers 310, and the TGO 312. In this manner, the plurality of recesses 314 compromise the EBC top coat 308, the TGO 312, and the bond coat 306 to assist with removal of such layers.

Each of the plurality of recesses have a recess depth 316 and a recess width 318. The recess depth 316 extends from the surface 322 of the etched coating 304 to the target layer 320. As illustrated, the recess depth 316 extends from the surface 322 of the etched coating 304 to the interface between the substrate 302 and the etched coating 304. With the recess depth 316 positioned in this manner, the plurality of recesses 314 expose an interior surface 324 of the etched coating 304 that is disposed between the surface 322 and the substrate 302. The interior surface 324 includes interior portions of the bond coat 306, the EBC layers 310, and the TGO 312, which are exposed due to the recesses 314. Thus, portions of the bond coat 306, the EBC layers 310, and the TGO 312 may be weakened by the plurality of recesses 314 and/or exposed to reagent(s) in subsequent chemical removal methods. As such, layers through which the plurality of recesses 314 extend are targeted or compromised for removal.

Although, as illustrated, the plurality of recesses 314 have a cross-sectional side profile that is generally "V"-shaped, it is to be understood that the plurality of recesses 314 may have any suitable shape. The shape of the plurality of recesses 314 may be impacted by the method or tool used to form the plurality of recesses 314. For example, a laser may result in a recess having a U-shaped or a V-shaped recess while a blade may result in a recess having a V-shaped or generally rectangular shape. Chemical etching may result in a recess that is generally U-shaped or a generally rounded shape. In some examples, the plurality of recesses 314 may have a cross-sectional side profile that is generally rectangular in shape. In another example, the plurality of recesses 314 may have a rounded bottom or tip or be generally "U"-shaped or rounded.

Referring now to FIG. 4, in yet other embodiments, the target layer 320, 420 of the coated component 400 is not the substrate 402 and, instead, is a layer of the coating. In one embodiment, the target layer 420 of the coated component 400 is the bond coat 406 portion of the coating. For example, the recess depth 416, may extend through one or more coating layers to an interface with a bond coat 406. In another example (not shown), the target layer may be a particular one of the plurality of EBC layers of the EBC top coat. In some approaches, a particular layer of the coating may be the target layer such that the recesses reach or extend beyond a depth of one or more defects in the coating. In FIG. 4, an exemplary etched coating 404 with recesses having a recess depth 416 that extends through the coating layers to the interface of another layer of the coating (e.g., a TGO, or top layer of the coating) with a bond coat is shown.

The etched coating 404 includes a bond coat 406 and an EBC top coat 408. In the etched coating 404, a TGO 412 is formed between the bond coat 406 and the EBC top coat 408. The EBC top coat 408 includes a plurality of EBC layers 410. The etched coating 404 includes a plurality of recesses 414 formed therein. In some approaches, the etched coating 404 is produced or formed using the method 200 of FIG. 2 or portions thereof. In some embodiments, the coated component 400 corresponds to the coated component 100 of FIG. 1.

In the etched coating 404, each of the plurality of recesses 414 extends from a surface 422 of the etched coating 404 to a target layer 420. As illustrated, the target layer 420 is a portion of the bond coat 406. The target layer 420 is disposed at an interface between the bond coat 406 and another portion the etched coating 304 (e.g., the TGO 412). Each of the plurality of recesses 414 extend through the EBC layers 410 and the TGO 412. In this manner, the plurality of recesses 414 compromise the EBC layers 410 and the TGO 412 to assist with removal of such layers.

Each of the plurality of recesses 414 have a recess depth 416 and a recess width 418. The recess depth 416 extends from the surface 422 of the etched coating 404 to the target layer 420. As illustrated, the recess depth 416 extends from the surface 422 of the etched coating 404 to the interface between the bond coat 406 and the etched coating 404. With the recess depth 416 positioned in this manner, the plurality of recesses 414 expose an interior surface 424 of the etched coating 404 that is disposed between the surface 422 and the bond coat 406. The interior surface 424 includes interior portions of the EBC layers 410, and the TGO 312 that are exposed. Thus, portions of the EBC layers 410 and the TGO 412 may be weakened by the plurality of recesses 414 and/or exposed to reagent(s) in subsequent chemical removal methods. As such, layers through which the plurality of recesses 414 extend are targeted or compromised for removal.

Although, as illustrated, the plurality of recesses 414 have a cross-sectional side profile that is generally "V"-shaped, it is to be understood that the plurality of recesses 414 may have any suitable shape. The shape of the plurality of recesses 414 can be as is described with reference to the plurality of recesses 314 of FIG. 3.

In some embodiments, one or more of the plurality of recesses 314, 414 have a recess depth 316, 416 of that is about 20 percent to about 100 percent, about 70 percent to about 100 percent, about 80 percent to about 100 percent, about 90 percent to about 100 percent, or about 95 percent to about 100 percent of a thickness of the coating. In some embodiments, one or more of the plurality of recesses 314, 414 have a recess width 318, 418that is in the range of about 0.01 millimeters (mm) to about 5 mm, about 0.01 mm to about 4 mm, about 0.01 mm to about 3 mm, about 0.01 mm to about 2 mm, about 0.01 mm to about 1 mm, about 0.05 mm to about 5 mm, about 1 mm to about 5 mm, about 2 mm to about 5 mm, about 3 mm to about 5 mm, about 4 mm to about 5 mm, about 1 mm to about 4 mm, about 1 mm to about 3 mm, or about 1 mm to about 2mm. The recess width may be the widest point of the recess.

In some embodiments, each of the plurality of recesses 314, 414 is spaced from another one of the plurality of recesses 314, 414 by a distance that is within about 40 percent to about 60 percent of the recess depth or, in some aspects, is within about 50 percent of the recess depth. That is, a spacing between adjacent recesses in the plurality of recesses 314, 414 may be within about 40 percent to about 60 percent of the recess depth, or, in some aspects, within about 50 percent of the recess depth. For example, if the recesses have a recess depth 316, 416 that is about 10 mm, the spacing between adjacent recesses should be between about 5 mm and 15 mm (e.g., within about 50 percent of the recess depth). In some embodiments, one or more or, in some embodiments, each of the plurality of recesses 314, 414 is spaced from another one of the plurality of recesses 314, 414 by a distance that is within about 10 percent to about 40 percent of the recess depth, is within about 20 percent to about 30 percent of the recess depth, or, in some aspects, is within about 25 percent of the recess depth.

In some embodiments, one or more of the plurality of recesses 314, 414 may extend into the substrate 302, 402 (not shown). For example, depending on the way the recesses are formed, it may not be possible to adjust or tailor the recess depth 316, 416 for particular areas of the coating, for example, to accommodate variations in coating thickness. Certain processes may form recesses that all have the same or approximately the same depth. However, the thickness of the coating (e.g., for a field run part) may be non-uniform. Thus, some of the recesses may extend through an entirety of the coating and into the underlying substrate.

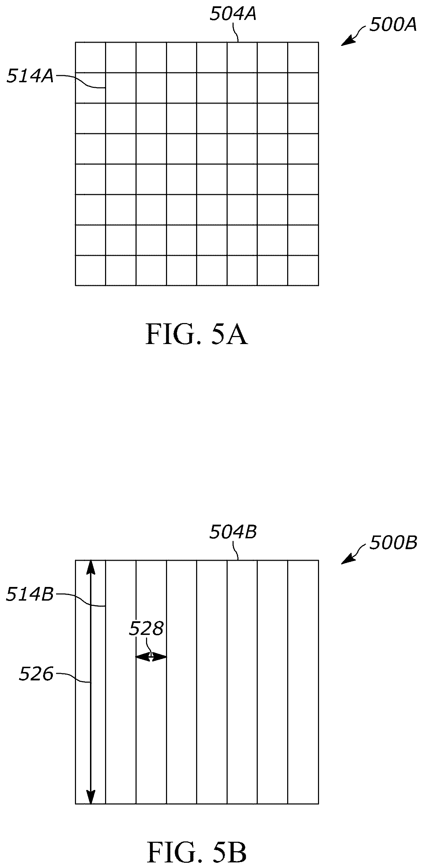

The plurality of recesses 314, 414 may form a pattern on the surface of the coated component. The pattern can include but is not limited to at least one of a grid or a grouping of lines, notches, or rounded recesses. Examples of patterns that can be formed on the coated component are shown in FIGS. 5A, 5B, and 5C.

FIGS. 5A, 5B, and 5C show example patterns 500A, 500B, 500C of recesses that may be formed in a coating, in accordance with the approaches described herein. In some embodiments, one or more of the patterns 500A, 500B, 500C are formed in the EBC 104 of the coated component 100 of FIG. 1. The recesses 314 in the etched coating 304 of FIG. 3 may also be formed in one or more of the patterns 500A, 500B, 500C. Further, the recesses 414 in the etched coating 404 of FIG. 4 may be formed in one or more of the patterns 500A, 500B, 500C. In some embodiments, one or more of the patterns 500A, 500B, 500C are formed in a coating via the method 200 of FIG. 2.

FIG. 5A shows a first plurality of recesses 514A that are disposed or arranged in a first pattern 500A. The first pattern 500A is formed in a first coating 504A. In the first coating 504A, the first plurality of recesses 514A are arranged to form a grid.

FIG. 5B shows a second plurality of recesses 514B that forms a second pattern 500B. The second pattern 500B is formed in a second coating 504B. In the second coating 504B, the second plurality of recesses 514B are formed as lines that are spaced from and generally parallel to each other.

FIG. 5B shows an exemplary recess length 526. In FIG. and recess spacing 528. In FIG. 5B, the coated component is shown with each of the plurality of recesses 514B having a recess length 526). The recess length 526 extends across an entire surface of the coated component such that the entire second coating 504B can be stripped or removed. It is to be understood that, in some approaches, the recess length 526 may only extend across a portion of the second coating 504B, for example, to remove a section of the second coating 504B.

FIG. 5B shows an exemplary recess spacing 528. In some embodiments, the recess spacing 528 (e.g., a distance between adjacent recesses in the second plurality of recesses 514B) may be within about 40 percent to about 60 percent of a recess depth, or, in some aspects, within about 50 percent of the recess depth. In some embodiments, the recess spacing 528 may be within about 10 percent to about 40 percent of the recess depth, within about 20 percent to about 30 percent of the recess depth, or, in some aspects, within about 25 percent of the recess depth. Recess depth is illustrated by reference number 316 in FIG. 3 and by reference number 416 in FIG. 4.

FIG. 5C shows a third plurality of recesses 514C that forms a third pattern 500C. The third pattern 500C is formed in a third coating 504C. In the third coating 504C, the third plurality of recesses 514C are formed as holes that are spaced from each other. The holes are generally circular when viewed from the top. In the third pattern 500C the holes are generally arranged in lines; the lines being spaced from and generally parallel to each other.

It is contemplated that the recesses (e.g. 514A, 514B, 514C) may include one or more dimensions that are selected based on a dimension of the coating (e.g., 504A, 504B, 504C) that is to be stripped or removed from the coated component. Dimensions of the recesses that can be adjusted may depend on the shape of the recess and can include one or more of a length, width, circumference, radius, diameter, spacing etc., of the recess(es). In some embodiments, the recess length extends across an entire surface of the coated component. In some approaches, the recess length may only extend across a portion of the second coating.

Further, the recesses (e.g., 514A, 514B, 514C) may have a particular spacing between adjacent recesses. The recess spacing may be within about 40 percent to about 60 percent of the recess depth, or, in some aspects, within about 50 percent of the recess depth. In some embodiments, the recess spacing may be within about 10 percent to about 40 percent of the recess depth, within about 20 percent to about 30 percent of the recess depth, or, in some aspects, within about 25 percent of the recess depth.

Referring back to FIG. 2, at block 218, at least a portion of the etched coating 304, 404 is removed from the coated component 300, 400 to expose at least a portion of the target layer 320, 420 and form a stripped substrate. For example, one of more layers through which the plurality of recesses extend can be removed. The etched coating 304, 404 or portions thereof can be removed by subjecting the etched coating 304, 404 to at least one of a mechanical removal process or a chemical removal process.

Any suitable mechanical removal process can be used to remove the etched coating 304, 404 from the coated component 300, 400. Suitable mechanical removal processes that can be used to remove the etched coating 304, 404 include but are not limited to scraping with a blade or abrasive blasting. The blade can be in the form of a knife or any other sharp implement. Abrasive blasting can include, but is not limited to, water jetting, grit blasting, ice blasting, or combinations thereof.

Any suitable chemical removal process can be used to remove the etched coating 304, 404 from the coated component 300, 400. Suitable chemical removal processes that can be used to remove the etched coating 304, 404 from the coated component include but are not limited to breaking down the etched coating 304, 404 (e.g., via stripping, digestion) using a reagent. Digestion includes exposing the etched coating 304, 404 to a reagent. In some embodiments, the reagent is selected to selectively remove the coating while leaving the substrate intact. In some embodiments, when the coating is an EBC, the reagent is a hydroxide or a hydrogen containing compound. In some embodiments, when the coating is an EBC, the reagent is a mineral acid. In some examples, the mineral acid comprises at least one of nitric acid (HNO₃), hydrochloric acid (HCl), hydrofluoric acid (HF), sulfuric acid (H₂SO₄), phosphoric acid (H₃PO₄), hydrogen peroxide (H₂O₂), aqua regia, reverse aqua regia, or boric acid (H₃BO₃). In some embodiments, the reagent includes a hydroxide (e.g., an XOH compound). In some examples, the hydroxide includes at least one of sodium hydroxide (NaOH) or potassium hydroxide (KOH). In some embodiments, the reagent is a hydrogen fluoride (HF)-containing compound such as hydrofluoric acid (HF) or ammonium bifluoride (NH₄HF₂). In yet other embodiments, the reagent includes at least one of potassium bisulfate (KHSO₄), sodium bisulfate (NaHSO₄), lithium borate (Li₂B₄O₇), sodium borate (Na₂B₄O₇), lithium metaborate (LiBO₂), sodium pyrosulfate (Na₂S₂O₇), potassium pyrosulfate (K₂S₂O₇), sodium carbonate (Na₂CO₃), potassium carbonate (K₂CO₃), sodium peroxide (Na₂O₂), sodium fluoride (NaF), potassium fluoride (KF), or potassium bifluoride (KHF₂).

In some embodiments, digestion or stripping is performed at an elevated temperature and/or an elevated pressure to expedite the rate of the digestion reaction. For example, the digestion or stripping may be performed in a temperature-controlled vessel. In some examples, the temperature-controlled vessel is a closed vessel such that pressure is able to build in the vessel, for example, when the vessel is heated. In some approaches, microwave digestion is used to remove the etched coating 304, 404. In microwave digestion, the vessel is heated using microwave energy to expedite the rate of reaction.

Referring back to FIG. 2, at block 220, in some embodiments, a replacement coating is formed on at least a portion of the stripped substrate. In some embodiments, the replacement coating comprises a replacement environmental barrier coating. The replacement coating may be formed on an exposed layer (e.g., the target layer that is exposed via the coating removal process) or on portions thereof. In some approaches, a replacement bond coat is formed on the exposed layer (e.g., a substrate). The replacement bond coat may be formed between the exposed layer and the replacement coating.

The replacement coating can be formed via any suitable coating process. Suitable coating processes include but are not limited to thermal spray methods, slurry-based processes, physical vapor deposition processes, and/or sputtering techniques. Physical vapor deposition process, include but are not limited to electron beam physical vapor (EBPVD) and plasma spray physical vapor deposition (PSPVD). Sputtering techniques include but are not limited to magnetron sputtering, radio frequency (RF) sputtering, diode sputtering, and reactive sputtering.

Thermal spray methods that can be used to fabricate the replacement coating include but are not limited to air plasma spraying (APS), very low-pressure plasma spraying (VLPPS), suspension plasma spraying (SPS), high velocity oxygen fuel (HVOF) spraying, solution precursor plasma spray (SPPS), and high velocity air fuel (HVAF) spraying. APS involves generating a high temperature plasma jet to melt and accelerate fine powder particles towards a substrate. VLPPS involves spraying materials at low chamber pressures, which allows for the formation of fine molten droplets or vapor phase deposition. SPS involves injecting a liquid suspension containing fine powder particles into a plasma jet, where the liquid rapidly evaporates, and the particles melt before being deposited onto a substrate. HVOF spraying involves combusting a mixture of fuel and oxygen to create a high-pressure jet, which propels powder at supersonic speeds towards a substrate. SPPS involves injecting a liquid precursor solution containing dissolved compounds into a high-temperature plasma jet. As the solution enters the plasma, it rapidly evaporates and undergoes thermal decomposition, forming the fine oxide particles or droplets which are propelled towards a substrate. HVAF spraying involves using compressed air to combust fuel, creating a high-speed jet of hot gases that propels powder particles towards a substrate at high velocities.

FIG. 6 shows an exemplary coated component 600. The coated component 600 includes a substrate 602 with a coating 604A disposed thereon. In FIG. 6, a cutting tool 630 is being used to cut a plurality of recesses 614 in the coating 604A to form an etched coating 604B.

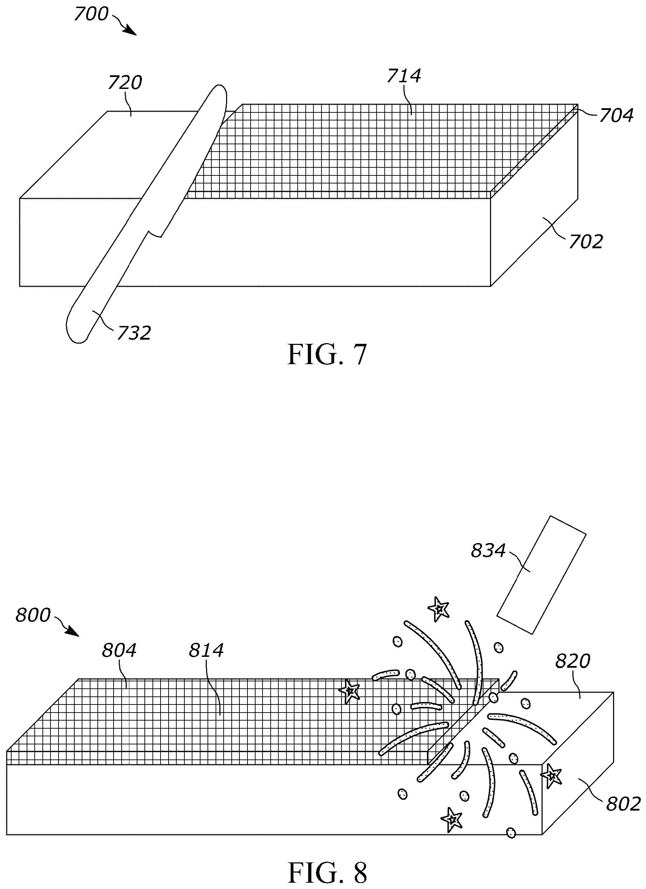

FIG. 7 shows an exemplary coated component 700. The coated component 700 includes a substrate 702 with an etched coating 704 disposed thereon. The etched coating 704 includes a plurality of recesses 714. In the etched coating 704, one or more of the plurality of recesses 714 extend down to a target layer 720 of the coated component 700. In FIG. 7, a blade 732 is being used to remove the etched coating 704 from the coated component 700 in a mechanical removal process to expose the target layer 720.

FIG. 8 shows an exemplary coated component 800. The coated component 800 includes a substrate 802 with an etched coating 804 disposed thereon. The etched coating 804 includes a plurality of recesses 814. In the etched coating 804, one or more of the plurality of recesses 814 extend down to a target layer 820 of the coated component 800. In FIG. 8, an abrasive blasting machine 834 is being used to remove the etched coating 804 from the coated component 800 in a mechanical removal process to expose the target layer 820.

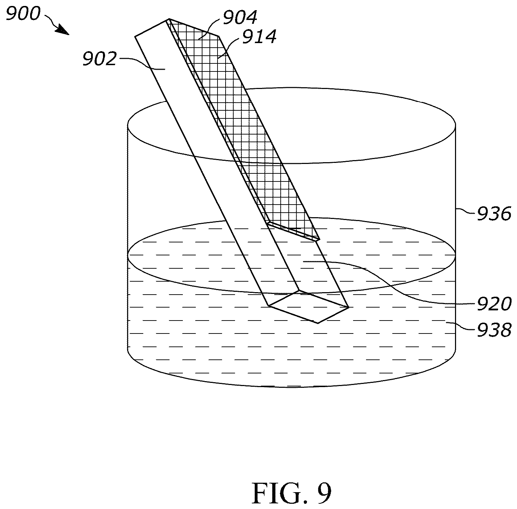

FIG. 9 shows an exemplary coated component 900. The coated component 900 includes a substrate 902 with an etched coating 904 disposed thereon. The etched coating 904 includes a plurality of recesses 914. In the etched coating 904, one or more of the plurality of recesses 914 extend down to a target layer 920 of the coated component 900. In FIG. 9, a chemical method is being used to remove the etched coating 904 from the coated component 900 to expose the target layer 920. A portion of the coated component 900 is submerged in a reagent 938 that is held in a vessel 936 to digest or strip the etched coating 904 from the coated component 900.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Further aspects of the disclosure are provided by the subject matter of the following clauses:
A method for removing a coating from a coated component, the coated component comprising a substrate with a coating disposed on the substrate, the coated component having one or more defects therein, the method comprising: forming a plurality of recesses in the coating that extend from a surface of the coating through one or more layers of the coating to a target layer to produce an etched coating; and removing the one or more layers of the coating by subjecting the etched coating to at least one of a mechanical removal process or a chemical removal process to expose the target layer.

The method of any preceding clause, wherein the target layer is a layer of the coating, a bond coat, or a portion of the substrate.

The method of any preceding clause, wherein the coated component is a newly manufactured part.

The method of any preceding clause, wherein the coated component is a field run component.

The method of any preceding clause, wherein the coating is an environmental barrier coating and wherein the substrate is a ceramic matrix composite.

The method of any preceding clause, wherein each recess in the plurality of recesses has a recess width of about 0.01 millimeters to 5 millimeters.

The method of any preceding clause, wherein each recess in the plurality of recesses has a recess depth of about 20 percent to about 100 percent of a thickness of the coating.

The method of any preceding clause, wherein a spacing between adjacent recesses in the plurality of recesses is within about 40 percent to about 60 percent of the recess depth.

The method of any preceding clause, wherein the plurality of recesses form a pattern on the surface of the coating.

The method of any preceding clause, wherein the pattern is at least one of a grid or a grouping of lines, notches, or rounded recesses.

The method of any preceding clause, wherein the coating further comprises a bond coat, the bond coat being disposed in direct contact with the substrate between the substrate and the coating.

The method of any preceding clause, wherein at least one of the plurality of recesses extends through an entire thickness of the coating and through a portion of the bond coat.

The method of any preceding clause, wherein at least one of the plurality of recesses extends through an entirety of a thickness of the bond coat and through an entirety of a thickness of the coating.

The method of any preceding clause, wherein forming the plurality of recesses is performed via at least one of a laser, ultrasonic machining, electrical discharge machining (EDM), carving with a sharp implement, abrasive water jetting, chemical etching, or engraving.

The method of any preceding clause, wherein the mechanical removal process comprises at least one of scraping or blasting.

The method of any preceding clause, wherein abrasive blasting includes at least one of water jetting, grit blasting, or ice blasting.

The method of any preceding clause, wherein the chemical removal process comprises exposing the etched coating to a reagent.

The method of any preceding clause, wherein the coating is an environmental barrier coating, and wherein the reagent comprises at least one of a hydroxide, a hydrogen containing compound, a mineral acid, or a hydrogen fluoride containing compound.

The method of any preceding clause, further comprising forming a replacement coating on at least a portion of the target layer.

The method of any preceding clause, wherein the replacement coating comprises at least one of a replacement bond coat or a replacement environmental barrier coating.

A method of repairing a coated component comprising a coating disposed on a substrate, the coating being a defective coating having one or more defects, the method comprising: forming a plurality of recesses in the coating that extend from a surface of the coating through one or more layers to a target layer to produce an etched coating; removing the one or more layers by subjecting the etched coating to at least one of a mechanical removal process or a chemical removal process to expose the target layer; and forming a replacement coating on the target layer.

The method of any preceding clause, wherein the replacement coating is formed via at least one of atmospheric plasma spraying (APS), dip coating, or spin coating.

The method of any preceding clause, wherein the coated component further comprises a bond coat, and wherein at least one of the plurality of recesses extends through at least a portion of the bond coat.

The method of any preceding clause, wherein the method further comprises forming a replacement bond coat on the target layer.

The method of any preceding clause, wherein the replacement bond coat is formed between the target layer and the replacement coating.

The method of any preceding clause, wherein the replacement bond coat is formed via at least one of a thermal spray method, a slurry-based process, a physical vapor deposition processes, and/or a sputtering technique.

The method of any preceding clause, wherein each recesses in the plurality of recesses has a recess width of about 0.01 millimeters to 5 millimeters.

The method of any preceding clause, wherein each recesses in the plurality of recesses has a recess depth of about 20 percent to about 100 percent of a thickness of the coating.

## Claims

1. A method for removing a coating (104) from a coated component (100, 700, 800, 900, the coated component (100, 700, 800, 900) comprising a substrate (102, 302, 602, 702, 802, 902) with the coating (104) disposed on the substrate (102, 302, 602, 702, 802, 902), the coating (104) having one or more defects therein, the method comprising:
forming a plurality of recesses (314, 414, 614, 714, 814, 914) in the coating (104) that extend from a surface (322, 422) of the coating (104) through one or more layers of the coating (104) to a target layer (320, 420, 720, 820, 920) to produce an etched coating (304, 404, 604B, 704, 804, 904, 604B); and
removing the one or more layers of the coating (104) by subjecting the etched coating (304, 404, 604B, 704, 804, 904) to at least one of a mechanical removal process or a chemical removal process to expose the target layer (320, 420, 720, 820, 920).

2. The method of claim 1, wherein the target layer (320, 420, 720, 820, 920) is a layer of the coating (104) or a portion of the substrate (102, 302, 602, 702, 802, 902).

3. The method of any preceding claim, wherein the coated component (100, 700, 800, 900) is a newly manufactured part.

4. The method of any preceding claim, wherein the coated component (100, 700, 800, 900) is a field run component.

5. The method of any preceding claim, wherein the coating (104) is an environmental barrier coating and wherein the substrate (102, 302, 602, 702, 802, 902) is a ceramic matrix composite.

6. The method of any preceding claim, wherein each recess in the plurality of recesses (314, 414, 614, 714, 814, 914) has a recess width (318, 418) of about 0.01 millimeters to 5 millimeters.

7. The method of any preceding claim, wherein each recess in the plurality of recesses (314, 414, 614, 714, 814, 914) has a recess depth (316, 416) of about 20 percent to about 100 percent of a thickness of the coating (604A).

8. The method of claim 7, wherein a spacing (528) between adjacent recesses in the plurality of recesses (314, 414, 614, 714, 814, 914) is within about 40 percent to about 60 percent of the recess depth (316, 416).

9. The method of any preceding claim, wherein the plurality of recesses (314, 414, 614, 714, 814, 914) form a pattern on the surface (322, 422) of the coating (104), and wherein the pattern is at least one of a grid or a grouping of lines, notches, or rounded recesses.

10. The method of any preceding claim, wherein the coating (104) further comprises a bond coat (106, 306, 406), the bond coat (106, 306, 406) is disposed in direct contact with the substrate (102, 302, 602, 702, 802, 902) between the substrate (102, 302, 602, 702, 802, 902) and the coating (104).

11. The method of claim 10, wherein at least one of the plurality of recesses (314, 414, 614, 714, 814, 914) extends through an entire thickness of the coating (104) and through a portion of the bond coat (106, 306, 406).

12. The method of claim 10, wherein at least one of the plurality of (314, 414, 614, 714, 814, 914) extends through an entirety of a thickness of the bond coat (106, 306, 406) and through an entirety of a thickness of the coating (104).

13. The method of any preceding claim, wherein forming the plurality of (314, 414, 614, 714, 814, 914) is performed via at least one of a laser, ultrasonic machining, electrical discharge machining (EDM), carving with a sharp implement, abrasive water jetting, chemical etching, or engraving.

14. The method of any preceding claim, wherein the mechanical removal process comprises at least one of scraping or abrasive blasting.

15. The method of any preceding claim, wherein the chemical removal process comprises exposing the etched coating (304, 404, 604B, 704, 804, 904, 604B) to a reagent (938).
